(19) Europäisches Patentamt
European Patent Office
Office européen des brevets

(11) **EP 3 729 985 A1**

(12) **EUROPEAN PATENT APPLICATION**
published in accordance with Art. 153(4) EPC

(43) Date of publication:
**28.10.2020 Bulletin 2020/44**

(51) Int Cl.:
**A41C 1/00** *(2006.01)*          **A41B 9/04** *(2006.01)*

(21) Application number: **18891712.4**

(22) Date of filing: **20.12.2018**

(86) International application number:
**PCT/JP2018/047113**

(87) International publication number:
**WO 2019/124525 (27.06.2019 Gazette 2019/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.12.2017   JP 2017245217**

(71) Applicants:
• **Asahi Kasei Kabushiki Kaisha**
  **Tokyo 1000006 (JP)**
• **Asahi Kasei Advance Corporation**
  **Tokyo 105-0004 (JP)**

(72) Inventors:
• **DEGUCHI, Junko**
  **Tokyo 100-0006 (JP)**
• **NAKAMURA, Sumi**
  **Tokyo 100-0006 (JP)**
• **SUGIYAMA, Keiko**
  **Tokyo 100-0006 (JP)**
• **TASHIRO, Mariko**
  **Tokyo 100-0006 (JP)**
• **ONISHI, Masami**
  **Tokyo 100-0006 (JP)**
• **SATAKE, Hisayo**
  **Tokyo 100-0006 (JP)**
• **YADA, Kazuya**
  **Tokyo 100-0006 (JP)**

(74) Representative: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(54) **BOTTOM GARMENT**

(57)     Provided is a bottom garment that excels in wearing feel and which, by being worn, enables efficient walking. A bottom garment according to the present invention is configured from a body fabric that includes an elastic yarn, wherein the bottom garment is characterized in that: an inner fabric is superposed on the inside of the body fabric, and there exists a double structure in which at least a portion of the inner fabric is not bonded to the body fabric; and the weft-direction stress of the inner fabric when 50% elongated is 0.3-1.6 times the weft-direction stress of the body fabric when 50% elongated.

FIG. 1

EP 3 729 985 A1

**Description**

FIELD

The present invention relates to a bottom garment.

BACKGROUND

In the past, various types of girdles, shorts, half pants, tights, spats, etc. have been studied for the purpose of improving the support of the muscles of the buttock part and maintaining a certain shape. For example, a girdle where, at the buttock part of the girdle, a buttock lining fabric having elasticity is positioned so as to cover the buttock part as a whole and thereby, since the lining fabric of the buttock part has elasticity, even when sitting or leaning forward, there will be no pulling feeling, the feeling when worn will be good, the worn fit will be maintained, and a beautiful shape of the hip area will be maintained has been proposed (PTL 1). Further, a girdle in which a member with a stronger tightening force than the main body of the girdle is partially arranged at the main body to improve the support effect with respect to the muscles has been proposed (see following PTL 2). Similarly, numerous sports tights and compression wear have also been proposed.

Further, to improve the feeling when worn and the compensation force, a girdle provided with a U-shaped tightening part covering the buttock bottom part and the buttock flank parts at the girdle main body has been proposed (see following PTL 3).

However, there has been no study on a bottom garment suppressing swaying of the buttock part without increasing the compression and thereby eliminating needless motion of the buttock part, enabling efficient walking, and keeping the buttock part from sagging.

[CITATIONS LIST]

[PATENT LITERATURE]

[PTL 1] Japanese Unexamined Patent Publication No. 2001-303305
[PTL 2] Japanese Unexamined Patent Publication No. 2004-300619
[PTL 3] Japanese Unexamined Patent Publication No. 2012-102419

SUMMARY

[TECHNICAL PROBLEM]

In view of the above prior art, the technical issue which the present invention tries to solve is the provision of a bottom garment which is excellent in feeling when worn and enables efficient walking by being worn.

[SOLUTION TO PROBLEM]

The inventors engaged in in-depth studies and ran repeated experiments to solve the above problem and as a result completed the present invention:
That is, the present invention is as shown below.

[1] A bottom garment comprised of a body fabric containing elastic yarn, in which bottom garment, there is a two-layer structure present in which an inside fabric is superposed at an inside of the body fabric and at least part of the inside fabric is not attached to the body fabric and in which a stress at the time of 50% stretching of the inside fabric in the horizontal direction is 0.3 time to 1.6 times the stress at the time of 50% stretching of the body fabric in the horizontal direction.
[2] The bottom garment according to [1], wherein the stress at the time of 50% stretching of the body fabric in the horizontal direction is 0.3N to 5N.
[3] The bottom garment according to [2], wherein the stress at the time of 50% stretching of the body fabric in the horizontal direction is 0.3N to 3N.
[4] The bottom garment according to any one of [1] to [3], wherein the compression of the buttock part is 5 hPa to 20 hPa.

[5] The bottom garment according to any one of [1] to [4], wherein an area ratio of the part of the inside fabric not attached to the body fabric is 70% or more of a total area of the inside fabric.

[6] The bottom garment according to any one of [1] to [5], wherein a ratio of a bottom end part of the inside fabric not attached to the body fabric is 20% to 100% of the total length of the bottom end part of the inside fabric.

[7] The bottom garment according to any one of [1] to [6], wherein the inside fabric has a size covering 10% or more and 60% or less of the area of the buttock part of the region of the body from left and right flank lines and a ridge plane to a gluteal fold.

[8] The bottom garment according to any one of [1] to [7], wherein a width of the inside fabric in a vertical direction is 5 cm to 20 cm.

[9] The bottom garment according to any one of [1] to [8], wherein the inside fabric covers at least part of a buttock bottom part.

[10] The bottom garment according to any one of [1] to [9], wherein at the front surface of the bottom garment, 70% or more of an attached part of a flank end part of the inside fabric is positioned above a horizontal line running through a point 5 cm above a fork part.

[11] The bottom garment according to any one of [1] to [9], wherein at the front surface of the bottom garment, 70% or more of an attached part of a flank end part of the inside fabric is positioned below a horizontal line running through a point 5 cm above a fork part.

[ADVANTAGEOUS EFFECTS OF INVENTION]

The bottom garment of the present invention is excellent in feeling when worn and is excellent in the effect that, by being worn, an external rotation force or internal rotation force is made to act on the calves whereby one's stride becomes greater and one's walking speed is increased.

BRIEF DESCRIPTION OF DRAWINGS

FIG. 1 is a view showing one example of the structure of a bottom garment of the present embodiment. In FIG. 1, the bold solid lines show locations which are attached by sewing while the bold broken lines show locations which are attached by bonding (same in FIGS. 2 to 13).

FIG. 2 is a view showing one example of the structure of a bottom garment of the present embodiment.

FIG. 3 is a view showing one example of the structure of a bottom garment of the present embodiment.

FIG. 4 is a view showing one example of the structure of a bottom garment of the present embodiment.

FIG. 5 is a view showing one example of the structure of a bottom garment of the present embodiment.

FIG. 6 is a view showing one example of the structure of a bottom garment of the present embodiment.

FIG. 7 is a view showing one example of the structure of a bottom garment of the present embodiment.

FIG. 8 is a view showing one example of the structure of a bottom garment of the present embodiment.

FIG. 9 is a view showing one example of the structure of a bottom garment of the present embodiment.

FIG. 10 is a view showing one example of the structure of a bottom garment of the present embodiment.

FIG. 11 is a view showing one example of the structure of a bottom garment of the present embodiment.

FIG. 12 is a view showing one example of the structure of a bottom garment of the present embodiment.

FIG. 13 is a view showing one example of the structure of a bottom garment of the present embodiment.

FIG. 14 is a view showing measurement points when verifying the effects of the bottom garment of the present embodiment.

DESCRIPTION OF EMBODIMENTS

Below, embodiments of the present invention will be explained in detail.

A bottom garment of the present embodiment is a bottom garment comprised of a body fabric containing elastic yarn, in which there is a two-layer structure present in which an inside fabric is superposed at an inside of the body fabric and at least part of the inside fabric is not attached to the body fabric and in which a stress at the time of 50% stretching of the inside fabric in the horizontal direction is 0.3 time to 1.6 times the stress at the time of 50% stretching of the body fabric in the horizontal direction.

The body fabric mainly forming the bottom garment of the present embodiment may also contain nonelastic yarn. The nonelastic yarn used for the body fabric mainly forming the bottom garment of the present embodiment is not particularly limited. For example, a polyamide-based fiber, polyester-based fiber, acryl-based fiber, polypropylene-based fiber, vinyl chloride-based fiber, or other chemical fiber can be used. The denier of the chemical fiber is preferably made a denier of 20 dtex to 200 dtex.

Further, the nonelastic yarn may be either of a filament yarn or spun yarn.

The form of the filament yarn may be any of raw yarn (unprocessed yarn), false twisted yarn, predyed yarn, etc. Further, it may also be a composite yarn of the same. The composite yarn may be an air mixed yarn, twisted yarn, covered yarn, false twisted mixed yarn, etc. It is not particularly limited. The cross-sectional shape of the filament yarn may be circular, triangular, cross-shaped, W-shaped, M-shaped, C-shaped, I-shaped, dog bone shaped, hollow yarn, etc. It is not particularly limited.

The form of the spun yarn may be either of single or mix spun. The method of mix spinning is also not particularly limited, but spun yarn obtained by the MVS system where peeling rarely occurs is preferable.

For the nonelastic yarn, bright yarn, semi dull yarn, fully dull yarn, etc. may be freely selected.

Cellulose fiber may be used for part of the nonelastic yarn. The cellulose fiber is also not particularly limited, but for example cupra, rayon, bamboo fiber, cotton, modal, and Tencel® may be used.

Cellulose fiber in the form of filament yarn may be any of raw yarn (unprocessed yarn), false twisted yarn, predyed yarn, etc. Further, it may also be the above-mentioned composite yarns. Further, cellulose fiber in the form of spun yarn may be either single or mix spun.

The cellulose fiber is preferably cupra fiber. The denier of the cellulose fiber used is, in the case of filament yarn, preferably 30 dtex to 200 dtex, more preferably 30 dtex to 170 dtex, still more preferably 30 dtex to 120 dtex. Further, in the case of spun yarn, No. 60 to No. 30 spun yarn is preferable, No. 50 to No. 40 is more preferable. By mixing in cellulose fiber, due to its moisture absorption ability, it is possible to obtain a bottom garment excellent in feeling when worn, excellent in suppressing static electricity, and excellent in flexing softness.

The bottom garment of the present embodiment has elastic yarn arranged in at least part of the body fabric forming the bottom garment. The "elastic yarn" partially arranged at the body fabric of the bottom garment of the present embodiment indicates fiber with an elongation at break of 100% or more. The polymer or method of spinning the elastic yarn is not particularly limited. Polyurethane elastic yarn (also called "spandex" or "spandex fiber"), polyether ester elastic yarn, polyamide elastic yarn, and polyolefin elastic yarn may be mentioned. For example, with polyurethane elastic yarn, dry type spinning or melt spinning may be used. Further, these elastic yarns may be sheathed by nonelastic yarn and rendered a covered state. Further, yarn-shaped so-called rubber yarn made of natural rubber, synthetic rubber, or semisynthetic rubber etc. may be used, but polyurethane elastic yarn which is excellent in elasticity and generally broadly used is optimal. Among these, ones in which the diol components forming the polyurethane polymer have side chains are preferable, ones in which the side chains are methyl groups are more preferable, and ones having two methyl groups on the same carbon are still more preferable.

From the viewpoint of giving the fabric excellent elasticity, the elongation at break of the elastic yarn is preferably 400% to 1000%. The above elongation at break is the value measured by the method described in JIS L1013 8.5.1. Tensile Strength and Elongation.

The elastic yarn preferably is not impaired in elasticity near the ordinary treatment temperature of 180°C in the preset step at the time of dyeing. Further, elastic yarn to which a special polymer or powder is added to impart a high setting ability, odor absorbing ability, bacteria fighting ability, moisture absorbing ability, water absorbing ability, and other functional abilities can also be used. Regarding the denier of the elastic yarn, a fiber of a 10 dtex to 700 dtex (decitex, below, same notation used) extent can be used. If using the elastic yarn for looping, 12 dtex to 250 dtex extent elastic yarn is preferably used. When using a raschel knitting machine to insert knit elastic yarn, 70 dtex to 700 dtex elastic yarn is preferably used.

As the body fabric mainly forming the bottom garment of the present embodiment, a woven fabric or knitted fabric may be used. This is suitably selected in accordance with the item. From the viewpoint of the elasticity, a knitted fabric is preferable.

In the case of warp knitting, a structure obtained by a raschel knitting machine or tricot knitting machine where elastic yarn is inserted or looped is preferably used. In a raschel structure, 6 course satin, 4 course satin, 6 course tulle, triconet, or other structure in which thick spandex fiber is inserted may be suitably used. A structure having two spandex yarns inserted to give elongation vertically and horizontally is particularly preferable from the viewpoint of the feeling when worn. In tricot, a half tricot, double stitch, atlas knit, etc. are excellent in elasticity, so are preferable.

In the case of circular knitting, a structure in which the elastic yarn is looped is preferable.

As the body fabric, a woven fabric in which elastic fibers are woven in is also suitably used.

The body fabric of the present embodiment, as a product for general consumers, preferably has a stress at the time of 50% stretching in the horizontal direction of 0.3N to 3N, more preferably 0.3N to 2.5N, still more preferably 0.5N to 1.5N. The stretch stress is measured using a Tensilon tensile test machine to stretch a 2.5 cm width fabric clamped at a 10 cm interval by a tensile speed of 300 mm/min. The stress at a stretch rate of 50% is read. If the stress at the time of 50% stretching of the body fabric in the horizontal direction is 3N or less, the tightening when worn does not become too strong and the garment is comfortable. On the other hand, if the stress at the time of 50% stretching of the body fabric in the horizontal direction is 0.3N or more, the compensation effect becomes higher. Further, as a product for an athlete with a large muscle mass etc, a body fabric with a stress at the time of 50% stretching in the horizontal direction of 0.3N to 5N is preferable. More preferably, it is 0.3N to 4.5N, still more preferably it is 0.5N to 4.0N.

Further, the stress at the time of 50% stretching of the body fabric in the vertical direction of 0.3N to 4N is preferable. If the stress at the time of 50% stretching of the body fabric in the vertical direction is 4N or less, the ability to follow movement at the time of sitting or leaning forward becomes higher. On the other hand, if 0.3N or more, the compensation effect is improved. Further, in this Description, the "horizontal direction" means the circumferential direction in a bottom product (circumferential direction of body when worn), while the "vertical direction" means the up-down direction in a bottom product (height direction of body when worn).

When used for a girdle, shorts, or other innerwear, the hem at the leg side is preferably a hem structure formed by drawn thread or a free cut structure with no unraveling or curling of threads of the cut section and used left as cut. By using these, there is no need to sew the ends, so the end can be kept from becoming thicker and can be prevented from being pressed against the skin and leaving marks against the skin. Further, the outerwear is not affected in its lines and a beautiful form is maintained. As the free cut material, for example, a mixed material of an easily melting type of polyurethane and nonelastic fiber is preferably used. As the nonelastic yarn, Nylon or polyester is preferably used.

The bottom garment of the present embodiment is characterized by having a two-layer structure comprised of a body fabric at the inside of which (at the body side when worn) an inside fabric is superposed.

As the inside fabric, a woven fabric or knitted fabric is used. It is suitably selected according to the finished product, but from the viewpoint of the elasticity, a knitted fabric is preferable. In the case of warp knitting, a structure obtained by a raschel knitting machine or tricot knitting machine where elastic yarn is inserted or looped is preferably used. In a raschel structure, 6 course satin, 4 course satin, 6 course tulle, triconet, or other structure in which thick spandex fiber is inserted may be suitably used. A structure having two spandex yarns inserted to give elongation vertically and horizontally is particularly preferable from the viewpoint of the feeling when worn. In a jacquard raschel, there may be a difference in the stretch stress of the fabric inside the panels of the inside fabric. In tricot, a half tricot, double stitch, atlas knit, etc. are excellent in elasticity, so are preferable. In the case of circular knitting, one with a looped elastic yarn is preferable.

In the present embodiment, the stress at the time of 50% stretching of the inside fabric in the horizontal direction has to be 0.3 time to 1.6 times the stress at the time of 50% stretching of the body fabric in the horizontal direction, preferably is 0.3 time to 1.3 times, more preferably is 0.3 time to 1.1 times, still more preferably is 0.3 time to 0.9 time, and still more preferably is 0.5 time to 0.9 time. If the stress at the time of 50% stretching of the inside fabric in the horizontal direction is less than 0.3 time the stress at the time of 50% stretching of the body fabric in the horizontal direction, the garment becomes poor in support effect, while if the stress at the time of 50% stretching of the inside fabric in the horizontal direction is more than 1.6 times the stress of the body fabric in the horizontal direction, the stress of the inside fabric becomes too strong and garment becomes poor in comfort.

At the inside fabric of the present embodiment, from the viewpoint of causing an external rotational force or internal rotation force to efficiently act, the area by which the inside fabric covers the buttock part is preferably 60% or less of the area of the buttock part. In this Description, the "buttock part" means the region from the left and right flank sides of the body and ridge plane (waist part) to the gluteal fold. If the inside fabric is 60% or less of the area of the buttock part, when worn, the stretch balance of the inside fabric easily changes and the forces pulling the thigh parts to the outside or inside become stronger and more effective. 50% or less would be more preferable. Further, if the area of the buttock part covered is a certain level or more, when the inside fabric is stretched, the garment will not cut into the body and the compression due to the time of stretching will also be low, so the feeling when worn will be good. For this reason, the inside fabric preferably covers at least 10% or more of the buttock part. Further, if covering the thigh top parts, it is preferable to cover parts within 10 cm from the gluteal fold in the calf direction.

Further, the inside fabric preferably covers part of the buttock bottom part with its large swaying property from the viewpoint of keeping down swaying of the buttock part. In this Description, the "buttock bottom part" means the part at the buttock part down from the most protruding points of the left and right buttocks (hip tops) at the positions of the largest circumference of the buttock part, while "covers part of the buttock bottom part" means covering 30% or more of the area of the buttock bottom part, preferably covering 50% or more.

The width of the inside fabric in the product vertical direction is preferably 5 cm to 20 cm, more preferably 5 cm to 18 cm. If the width of the inside fabric in the vertical direction is 5 cm or more, sufficient area is covered with respect to the body, the stretch force at the time when the fabric is stretched is easily applied to the body, and an external rotation effect or internal rotation effect is easily manifested. On the other hand, if the width of the inside fabric in the vertical direction is 20 cm or more, the stretch balance of the inside fabric easily changes when worn, the forces pulling the thigh parts to the outside or inside become stronger, and the external rotation force or internal rotation force is easily manifested.

The inside fabric of the bottom garment of the present embodiment is characterized in that it is arranged at the inside of the body fabric and at least part is not attached to the body fabric. Here, "not attached" means the fabrics are not in placed in close contact and immobilized by sewing, bonding, or other means and the fabrics float free. By superposing at least part of the inside fabric having a stress at the time of stretching of 0.3 time to 1.6 times the body fabric against the body fabric without attaching it to the body fabric, the effect is exhibited that swaying of the buttock part is suppressed at the time of walking or the time of running. Further, by at least part of the inside fabric not being attached, when sitting down or when still, the stretch balance of the inside fabric changes from the front part side to the buttock part side whereby a force is generated pulling the thigh parts to the outside or inside. Further, when walking, the inside fabric shifts matching with the movement, and the stretch balance of the inside fabric greatly changes from the front part side to the buttock part side compared with when still, whereby a force is generated pulling the thigh parts further to the outside or inside. Due to the effect of pulling in the thigh parts, an external rotation force or internal rotation force is generated with respect to the calf parts and a force opening up or closing the legs is generated. This action is believed to lead to a rise in the stride and walking speed. Further, by making an external rotation force act on knock knees and making an internal rotation force act on bow legs, the positions of the femurs are corrected to the normal direction and the legs become easier to extend when walking or otherwise upright, so this is believed to lead to a further increase in stride or walking speed.

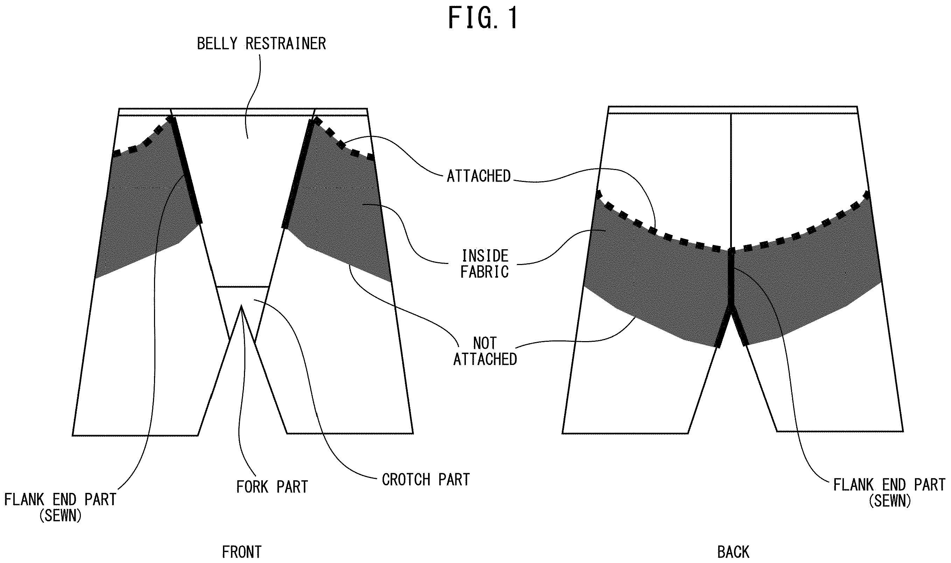

Preferable examples of the arrangement of the members in the bottom garment of the present embodiment are shown in FIG. 1 to FIG. 13.

In FIGS. 1, 3, 4, and 6, the inside fabric is arranged from the waist part to the buttock bottom part. In the arrangement of the fabric, when worn, the amount of stretch of the fabric at the portion of the inside fabric corresponding to the buttock bottom part becomes larger than the amount of stretch at the buttock part from the waist part, so the inside fabric is pulled in the buttock bottom part direction whereby a force is generated pulling the thigh parts to the outside (external rotation force) and therefore the effect is obtained of making the legs turn outward.

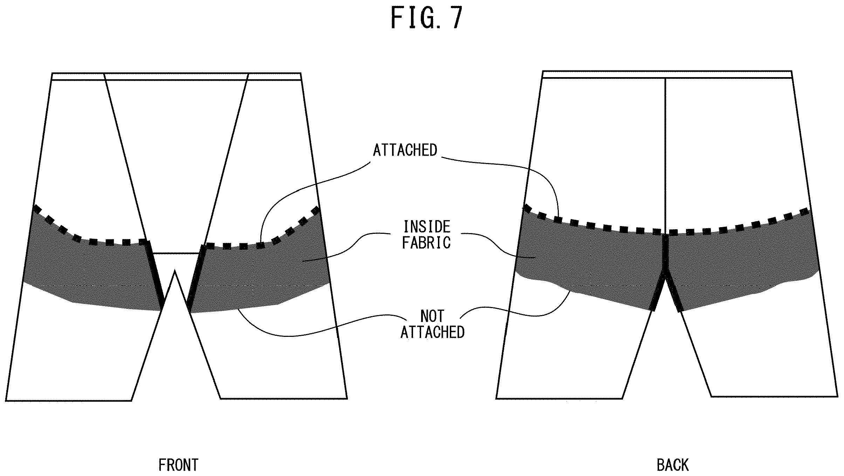

In FIGS. 7 to 11 and 13, the inside fabric is arranged at the thigh base parts or from the groin part to the buttock top part or gluteal fold to the thigh top parts. In the arrangement of the fabric, when worn, the amount of stretch of the inside fabric corresponding to the front surface part becomes larger than the amount of stretch at the inside fabric corresponding to the back part, so the inside fabric is pulled to the front surface side bottom part direction whereby a force is generated pulling the thigh parts to the inside (internal rotation force) and therefore the effect is obtained of making the legs turn inward.

The bottom garment of the present embodiment preferably has an area ratio of the part of the inside fabric not attached to the body fabric of 70% or more of the total area of the inside fabric, more preferably 80% or more, still more preferably 90% or more. If the area ratio is 70% or more, the effect of absorption of swaying and the effect of reduction of swaying are exhibited by the two fabrics, so this is preferable.

The attachment is preferably performed at several end parts of the inside fabric. For example, the parts attached with the top end part, bottom end part, and flank end parts (the left and right end parts of the inside fabric, the part attached to the crotch part, and the part attached to the front panel (also referred to as the "belly restraining panel" or the "panel") will be referred to all together as the "flank end parts", see FIG. 1) may be mentioned. In the end part of the inside fabric, 20% to 70% is preferably not attached. The portion not attached is preferably the bottom end part of the inside fabric. Furthermore, if the ratio of the bottom (lower) end part of the inside fabric not attached to the body fabric is 20% to 100% of the total length of the bottom (lower) end part of the inside fabric, the stretch balance of the inside fabric easily changes from the front part side to the buttock part side and a force pulling the thigh parts to the outside or inside becomes stronger, this is preferred. Further, the attached parts and the not attached parts may also be discontinuous.

If a girdle etc. is set with a belly restraining panel, the flank ends of the inside fabric are preferably respectively attached to left and right parts of the panel. The width of the panel in the product vertical direction is preferably 5 cm to 20 cm. The inside fabric is preferably bonded to one side of the front panel, runs through the back center, and is attached to the front panel at the other side.

To generate the above external rotation force, when laid flat, at the front surface of the bottom garment, 70% or more of an attached part at a flank end part of the inside fabric is preferably positioned above a horizontal line running through a point 5 cm above the fork part. The "fork part" shows the top point of the fork at the bottom part of the bottom shown in FIG. 1. As shown in FIG. 1, the parts shown by the solid bold lines at the two ends of the inside fabric are the attached parts of the flank end parts. If 70% or more of a solid bold line is positioned above the horizontal line running through a point 5 cm above the fork part, an external rotation force is easily generated.

Further, to generate an internal rotation force, when laid flat, at the front surface of the bottom garment, 70% or more of an attached part at a flank end part of the inside fabric is preferably attached to a part below the horizontal line running through a point 5 cm above the fork part. As shown in FIG. 7, the parts shown by the solid bold lines at the two ends of the inside fabric are the attached parts of the flank end parts. If 70% or more of a solid bold line is positioned below the horizontal line running through a point 5 cm above the fork part, an internal rotation force is easily generated.

If the end parts of the inside fabric are above the region 5 cm above the fork part, the stretch of the inside fabric at the front surface becomes smaller than the back surface, while if they are below it, the stretch of the inside fabric at the front surface becomes larger than the back surface, so external rotation force and internal rotation force respectively occur when worn.

For attachment, sewing, bonding, etc. are possible, but a method not detracting from the elongation of the fabric is preferable. With sewing, a twin-needle stitch or zigzag stitch is preferable, while with bonding, attachment by a width of 0.5 cm to 1.5 cm is preferable. Attachment by bonding is more preferable than by sewing since the level difference of the attached part is eliminated. Further, using a free cut material for the inside fabric is also preferable since the level difference of the end parts is eliminated.

By forming slits at the inside fabric, elongation and shifting at the time of movement are absorbed, so this is preferable. In particular, if attaching the circumference of the inside fabric to the body fabric, it is preferable to form slits at the inside fabric to absorb elongation and shifting at the time of movement. The size and number of the slits are not particularly limited. 0.5 cm to 10 cm or so lengths of slits can be suitably used.

The compression of the buttock part of the bottom garment of the present embodiment is preferably 5 hPa to 20 hPa, more preferably 8 hPa to 18 hPa. The "compression of the buttock part" means the average of the left and right compressions at the most protruding points of the left and right buttocks (hip tops) at the positions of the largest circumference of the buttock part. In an M size bottom garment, this is measured by attaching the garment to an M size standard body mannequin and using an air pack type compression meter. Further, in an L size bottom garment, this is measured by attaching the garment to an L size standard body mannequin. If the compression of the buttock part is 5 hPa or more, the compression is sufficiently large and the effect of suppressing swaying becomes high, so this is preferable. On the other hand, if the compression of the buttock part is 20 hPa or more, swaying of the buttock part is not spread, the swaying is effectively absorbed, and the sway dampening effect becomes higher, so this is preferable.

In a bottom garment for athletes, making the compression somewhat stronger is preferable from the viewpoint of supporting exercise performance. The compression of the buttock part is preferably 10 hPa to 20 hPa. Further, in the case of a bottom garment for athletes, from the viewpoint of dealing with sweat, the nonelastic yarn used for the body fabric or inside fabric is preferably a polyester-based fiber.

In a bottom garment for the elderly, raising the ease of attachment for wear by a somewhat weaker compression is preferable. The compression of the buttock part is preferably 5 hPa to 15 hPa. By making the compression of the buttock part this range, the ease of attachment for wear is also improved.

The inside fabric can also be superposed at the leg parts of half pants or compression wear. Swaying of the thighs and swaying of the calves can be suppressed.

The fabric used as the body fabric and/or inside fabric of the bottom garment of the present embodiment preferably has a stretch recovery rate when stretched up to 80% of the stretch rate of 85% or more in both the vertical direction and the horizontal direction. By the stretch recovery rate being 85% or more, exercise can be supported by a certain stress at the time of movement. Further, the stretch recovery rate is found by using a Tensilon tensile test machine, stretching and relaxing a 2.5 cm width fabric clamped at a 10 cm clamping interval by a tensile speed of 300 mm/min repeatedly 3 times, measuring the outbound stress up to a stretch rate of 80% and the return stress, reading the third residual elongation (%) from the obtained stretch-contraction curve, and calculating the rate by the following formula:

$$\text{Stretch recovery rate } (\%) = \{[80 - (\text{residual elongation})] \div 80\} \times 100$$

Further, the stretch rate at a stretch stress of 22.1N of the fabric used as the body fabric and/or inside fabric of the bottom garment of the present embodiment is preferably 100% to 400% in both the vertical direction and the horizontal direction. The stretch rate here is the stretch rate (%) when using a Tensilon tensile test machine and stretching a 2.5 cm width fabric clamped at a 10 cm clamping interval by a tensile speed of 300 mm/min until the stress becomes 22.1N. By having a 100% or more stretch rate in both of the vertical direction and the horizontal direction, there is no feeling of constraint against any sort of motion of the body when attaching or detaching the garment or when moving and movement is easy, so this is preferable. If 400% or less, sufficient support is provided for exercise, so this is preferable.

EXAMPLES

Below, the present invention will be explained specifically by examples and comparative examples. Further, in the examples and comparative examples, the stretch stress etc. were measured as follows:

(1) Stretch stress and stretch recovery rate

Using a Tensilon tensile test machine, a 2.5 cm width fabric clamped at a 10 cm clamping interval is repeatedly stretched and relaxed by a tensile speed of 300 mm/min 3 times, the outbound stress up to a stretch rate of 80% and the return stress are measured, and stretch-stress curves are drawn for the vertical direction and horizontal direction respectively. The stresses at the stretch rate of 50% at the first stretch operation are read and used as the stretch stresses in the vertical direction and the horizontal direction. If due to the form of the product, a clamped length of 10 cm cannot be secured, this is performed at a 5 cm clamping interval.

The stretch recovery rate is found for each of the vertical direction and the horizontal direction by reading the third residual elongation (%) from the stretch-relaxation curve in the above measurement of stretch stress and calculating the stretch recovery rates in the vertical direction and the horizontal direction by the following formula:

$$\text{Stretch recovery rate } (\%) = \{[80 - (\text{residual elongation})] \div 80\} \times 100$$

Further, the fabric used for measurement is sampled so as not to include attached parts, embroidered parts, or other parts where the stretch stress is partially high.

(2) Stretch rate

A Tensilon tensile test machine was used to measure the stretch rate (%) when stretching a width 2.5 cm fabric clamped at a clamping interval of 10 cm by a rate of 300 mm/min until a stress of 22.1N.

(3) Compression

An air pack connected to a compression measuring device AMI-3037-10 made by AMI Techno was attached to a standard body M size of mannequin at the left and right hip top parts (most protruding points of buttocks) and belly (3 cm below navel). The compression (kPa) when attaching an M size of the bottom garment of the present embodiment is measured when repeatedly attaching and detaching the garment three times and the average is found.

(4) Ratio of region of inside fabric not attached to body fabric

The ratio is calculated by the following formula:

$$\text{Ratio of region of inside fabric not attached to body fabric} = (S - S')/S \times 100 (\%)$$

where the area of the inside fabric superposed over the body fabric is S $(\text{cm}^2)$ and the area S' of the attached part is S' $(\text{cm}^2)$.

Further, when the above areas S and S' cannot be found, the above ratio is calculated by finding the weight of the paper patterns or fabric corresponding to the area of the paper patterns or area of the fabric and replacing the areas in the above formula with the weights.

(5) Ratio of bottom end part of inside fabric not attached to body fabric

The ratio of the bottom end part of the inside fabric not attached to the body fabric is calculated by the following formula:

$$\text{Ratio of bottom end part of inside fabric not attached to body fabric} = (P - P')/P \times 100 (\%)$$

where the end part of the inside fabric arranged in the bottom direction when worn (flank end parts not included) is P (cm) and the end part arranged in the bottom direction when worn and attached to the body fabric is P' (cm).

(6) Ratio of area of buttock part covered by inside fabric

At the bottom, the ratio of area of the buttock part covered by the inside fabric is calculated as

$$K'/K \times 100(\%)$$

where the area of the buttock region surrounded by the waist part and left and right flank lines and gluteal fold is K ($cm^2$) and the area in that area where the inside fabric is present is K'($cm^2$).

Further, when calculating this area, the bottom was attached to a mannequin corresponding to the M size and the K of the bottom corresponding to the buttock region K' of the mannequin was measured.

(7) Evaluation of swaying when worn (effect of preventing swaying)

A test subject put on the bottom garment and jogged on a treadmill (speed 5 km/h). At that time, the motion of the back center part at the waistline and the hip top parts was photographed by a high speed camera for 10 seconds. At the measured parts, 1.8 cm reflecting balls were attached. The swaying of the buttock part when worn was calculated as the average value over 10 seconds of (swaying of hip tops)-(swaying of back center part) (cm). The larger value of the vertical and horizontal values was defined as the swaying when worn (cm). The swaying "k" (cm) of the examples and comparative examples was calculated as the dampening effect on the swaying k1 (cm) when only shorts are worn by the following formula:

$$(k1-k)/k1 \times 100(\%)$$

The results of two subjects were averaged to calculate the result.

(8) Stride difference and walking time difference

Five 20 year to 60 year old test subjects put on the bottom garments and were then made to walk over a 800 meter circular course. The times T and strides Q were measured and the differences from the time T1 and stride Q1 when wearing only shorts were found. Further, in both cases, as outer garments, each test subject put on the same loose-fitting long pants and T-shirts and exercise shoes:

$$\text{Stride difference} = Q-Q1(cm)$$

$$\text{Walking time difference} = T-T1(sec)$$

(9) Knee angle $\Theta$

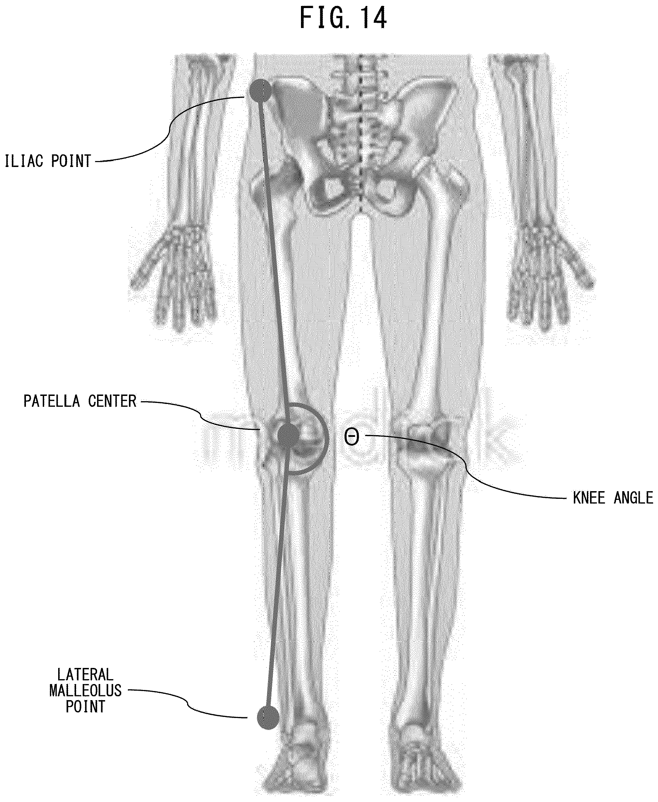

Five test subjects of age 20 to age 60 put on the bottom garments. In the still standing states, as shown in FIG. 14, reflection markers were attached to the iliac point, patella center, and lateral malleolus point. A motion analysis system (VINUS3D: made by Nobby-Tech Co., Ltd.) was used for measurement to determine the knee angle comprised of the iliac point, patella center, and lateral malleolus point ($\Theta$ shown in FIG. 14: showing inside angle of knees as seen from front). Further, the degree of the effect was calculated by the following formula:

$$\text{Knee angle } \Theta \, [°] = (\text{angle comprised of iliac point, patella center, and lateral malleolus}$$
$$\text{point when wearing bottom garment}) - (\text{angle comprised of iliac point, patella center, and lateral}$$
$$\text{malleolus point when not wearing bottom garment})$$

When the external rotation force acts and a knee is turned outward, $\Theta$ becomes a negative value, while when an internal rotation force acts and a knee is turned inward, $\Theta$ becomes a positive value. Further, the larger the absolute value of $\Theta$, the larger the internal rotation or external rotation action.

(10) Feeling when worn

The swaying feeling of the buttock part, tightening feeling, ease of motion, and tired feeling were evaluated by five test subjects and their responses averaged.

<Swaying feeling (swaying feeling of buttock part)>

5:    Extremely swaying
4:    Considerably swaying
3:    Swaying felt
2:    Some swaying felt
1:    Almost no swaying felt

<Tightening feeling>

5:    Very comfortable
4:    Somewhat comfortable
3:    Neither can be said
2:    Somewhat uncomfortable
1:    Very uncomfortable

<Ease of motion>

5:    Very easy to move
4:    Ease to move
3:    Neither can be said
2:    Somewhat hard to move
1:    Very hard to move

<Tiring feeling>

5:    Very little tiring feeling
4:    Little tiring feeling
3:    Neither can be said
2:    Somewhat large tiring feeling
1:    Very large tiring feeling

[Example 1]

The body fabric was obtained by using a raschel knitting machine for knitting while running Nylon 44 dtex34 filament at the front reed, spandex fiber (made by Asahi Kasei, ROICA® 155 dtex) at the middle reed, and spandex fiber (made by Asahi Kasei, ROICA® 33 dtex) at the back reed by full sets and making the front structure 1-0/2-1/2-3/1-2, the middle structure 0-0/1-1, and the back structure 0-0/3-3/2-2/3-3 to fabricate a fabric with a part corresponding to the hem becoming a hem structure. This was finished by an ordinary method.
Further, the inside fabric was obtained by using a single tricot machine for knitting running Nylon 33 dtex34 filament at the front reed and 15 dtex polyurethane fiber at the back reed by a full set and making the front structure 1-0/2-3 and the back structure 2-0/1-3. This was finished by an ordinary method.
The weft direction of the knitted fabric of the body fabric was arranged in the horizontal direction of the product and the inside fabric was superposed and attached by the pattern of FIG. 1 from near the center of the buttock part in the up-down direction to near the bases of the legs to fabricate a women's M size (body length 155 to 165 cm) girdle.

For the attachment, an adhesive made by BEMIS was used. A bonding machine was used for attachment by a pressure of 3BAR and a temperature of 160°C for 30 seconds. The attached width was made 1 cm. The lower end part of the inside fabric was free cut and therefore not sewn. Except for the crotch part, the body fabric was not attached with.

The results of a wear test are shown together with the properties of the knitted fabric and garment in the following Table 1 ([Table 1-2] is a continuation of [Table 1-1]).

[Example 2]

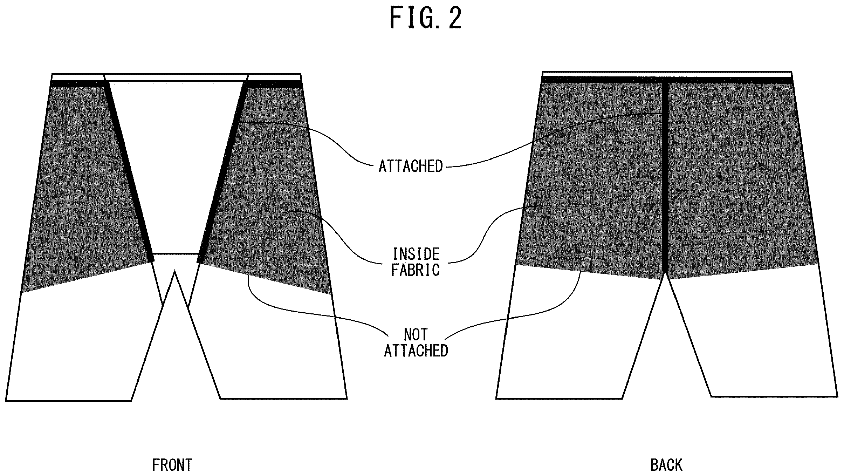

Except for, as shown in the pattern of FIG. 2, superposing and attaching the inside fabric from the waist position and over the buttock part to near the base parts of the legs, the same procedure as in Example 1 was followed to fabricate a women's M size girdle. This was evaluated in the same way as Example 1. The results of evaluation are shown in the following Table 1 together with the properties of the fabric and garment.

[Example 3]

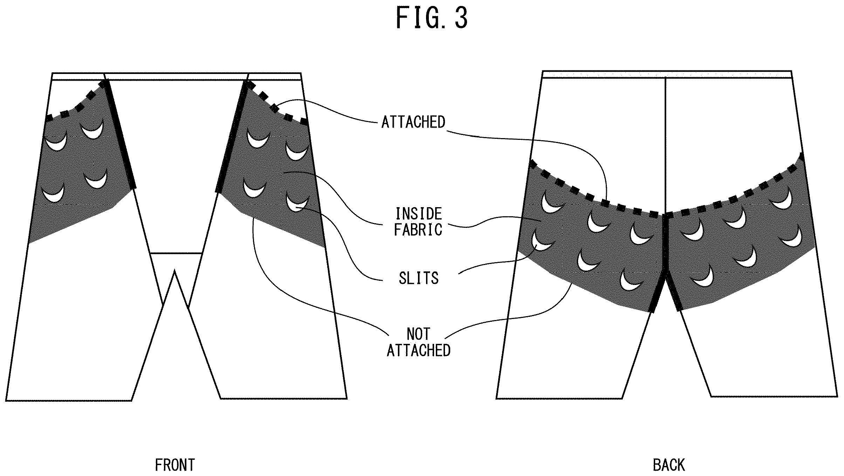

Except for, as shown in the pattern of FIG. 3, forming slits at the inside fabric and attaching the entire circumference of the inside fabric, the same procedure as in Example 1 was used to fabricate a women's M size girdle. This was evaluated in the same way as Example 1. The results of evaluation are shown in the following Table 1 together with the properties of the fabric and garment.

[Example 4]

Except for using as the body fabric a knitted fabric of 6 course satin knit by running 44 dtex/34f polyester filament at the front reed and 310 dtex polyurethane fiber at the back reed by full sets and using as the inside fabric a fabric knit obtained by using a 28 gauge single tricot machine knit by running 33 dtex/18f polyester filament at the front reed and 33 dtex polyurethane fiber at the back reed by full sets and making the front structure 2-3/1-0 and the back structure 1-0/1-2, the same procedure as in Example 1 was followed to fabricate a women's M size girdle. This was evaluated in the same way as Example 1. The results of evaluation are shown in the following Table 1 together with the properties of the fabric and garment.

[Example 5]

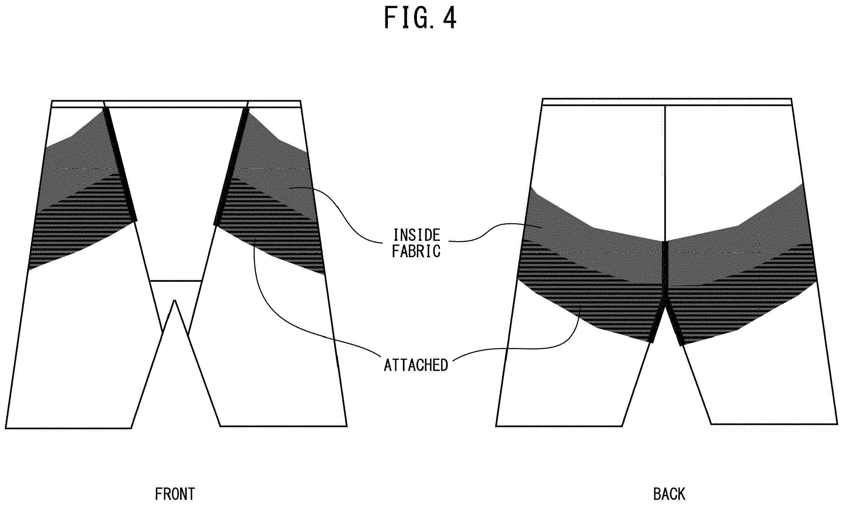

Except for, as shown in the pattern of FIG. 4, attaching the inside fabric during which not attaching the top 50% (top half in vertical direction length of inside fabric from line connecting center points) except for the flank parts of the inside fabric and attaching only the bottom part over the entire surface, the same procedure as in Example 1 was followed to fabricate a women's M size girdle. This was evaluated in the same way as Example 1. The results of evaluation are shown in the following Table 1 together with the properties of the fabric and garment.

[Example 6]

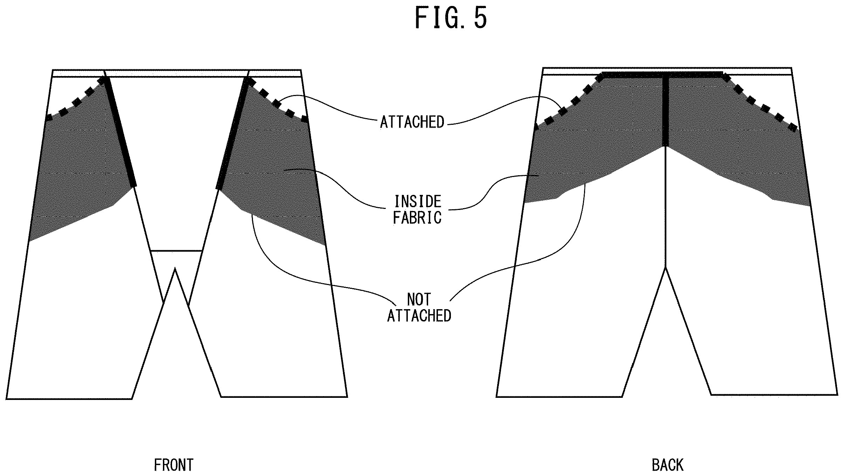

Except for, as shown in the pattern of FIG. 5, arranging the attached parts of the inside fabric of the front surface part from above the belly part and at the back surface placing the inside fabric so as to cover the buttock top part, the same procedure as in Example 1 was followed to fabricate a women's M size girdle. This was evaluated in the same way as Example 1. The results of evaluation are shown in the following Table 1 together with the properties of the fabric and garment.

[Example 7]

Except for using as the body fabric a knitted fabric of 6 course satin knit by running Nylon 44 dtex/34f at the front reed and 310 dtex polyurethane fiber at the back reed by full sets and using as the inside fabric a fabric knit by using a 28 gauge single tricot machine and running 33 dtex/18f polyester filament at the front reed and 33 dtex polyurethane fiber at the back reed by full sets and making the front structure 2-3/1-0 and the back structure 1-0/1-2, the same procedure as in Example 1 was followed to fabricate a women's M size girdle. This was evaluated in the same way as Example 1. The results of evaluation are shown in the following Table 1 together with the properties of the fabric and garment.

[Example 8]

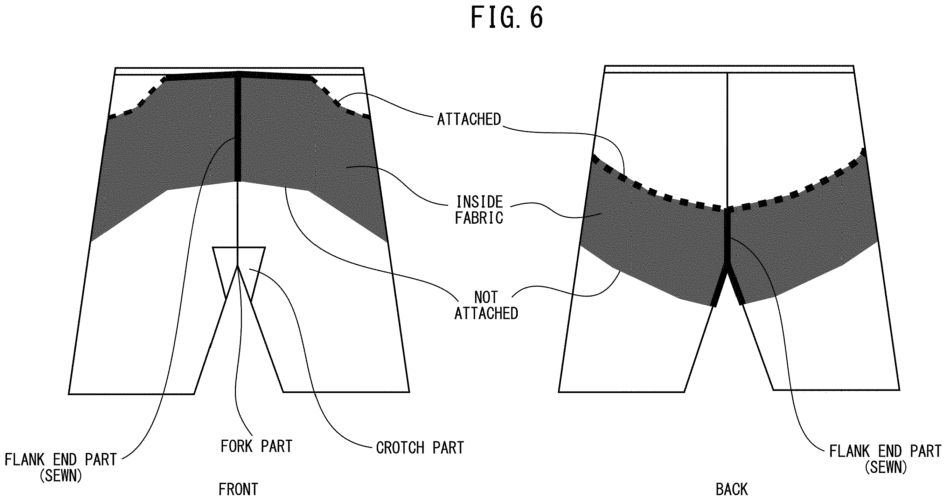

Except for, as shown in the pattern of FIG. 6, forming a bottom garment with no belly restraining panel at the front surface part where the attached parts of the inside fabric of the front surface part are arranged from the belly center part and at the back surface the inside fabric is placed as to cover the buttock top part, the same procedure as in Example 1 was followed to fabricate a women's M size girdle. This was evaluated in the same way as Example 1. The results of evaluation are shown in the following Table 1 together with the properties of the fabric and garment.

[Example 9]

Except for, as shown in the pattern of FIG. 7, running the inside fabric from the groin part position to the side surfaces and superposing and attaching it over the gluteal fold, the same procedure as in Example 1 was followed to fabricate a women's M size girdle. This was evaluated in the same way as Example 1. Further, the inside fabric was attached only at the top end of the inside fabric. The results of evaluation are shown in the following Table 1 together with the properties of the fabric and garment.

[Example 10]

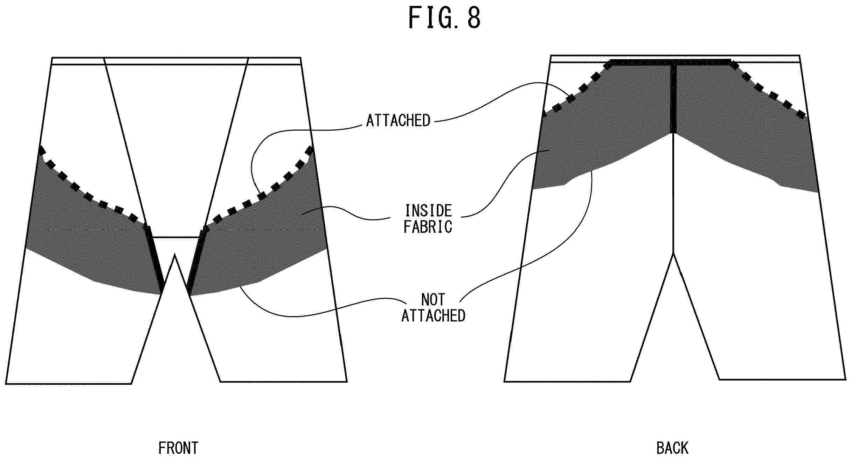

Except for, as shown in the pattern of FIG. 8, running the inside fabric from the groin part position to the side surfaces and superposing and attaching it over the waist top part, the same procedure as in Example 1 was followed to fabricate a women's M size girdle. This was evaluated in the same way as Example 1. Further, the inside fabric was attached only at the top end of the inside fabric. The results of evaluation are shown in the following Table 1 together with the properties of the fabric and garment.

[Example 11]

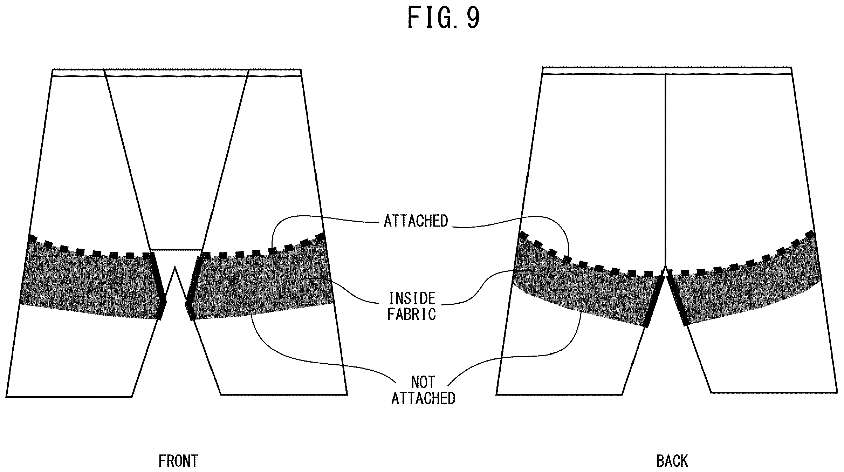

Except for, as shown in the pattern of FIG. 9, running the inside fabric from a portion from the groin part to the thigh top parts through the side surfaces and superposing and bonding it over the gluteal fold, the same procedure as in Example 1 was followed to fabricate a women's M size girdle. This was evaluated in the same way as Example 1. Further, the inside fabric was attached only at the top end of the inside fabric. The results of evaluation are shown in the following Table 1 together with the properties of the fabric and garment.

[Example 12]

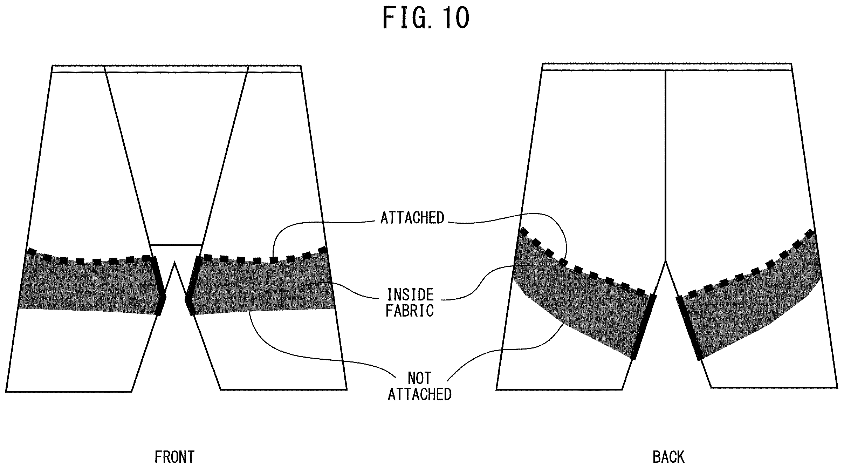

Except for, as shown in the pattern of FIG. 10, running the inside fabric from the thighs to parts through the side surfaces and superposing and attaching it over the thigh top parts of the back surface, the same procedure as in Example 1 was followed to fabricate a women's M size girdle. This was evaluated in the same way as Example 1. The inside fabric was set so that the front flank ends had widths of 4.1 cm and back flank ends of 10.2 cm or the width direction became larger from the front surface toward the back surface. Further, the inside fabric was attached only at the top end of the inside fabric. The results of evaluation are shown in the following Table 1 together with the properties of the fabric and garment.

[Example 13]

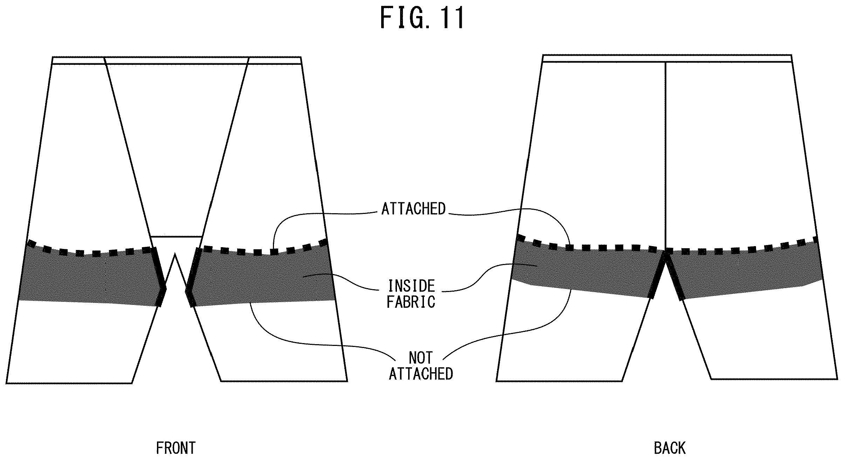

Except for, as shown in the pattern of FIG. 11, running the inside fabric from the positions of the thigh top parts straight to the side surfaces and superposing and attaching it at the gluteal fold, the same procedure as in Example 1 was followed to fabricate a women's M size girdle. This was evaluated in the same way as Example 1. Further, the inside fabric was attached only at the top end of the inside fabric. The results of evaluation are shown in the following Table 1 together with the properties of the fabric and garment.

[Example 14]

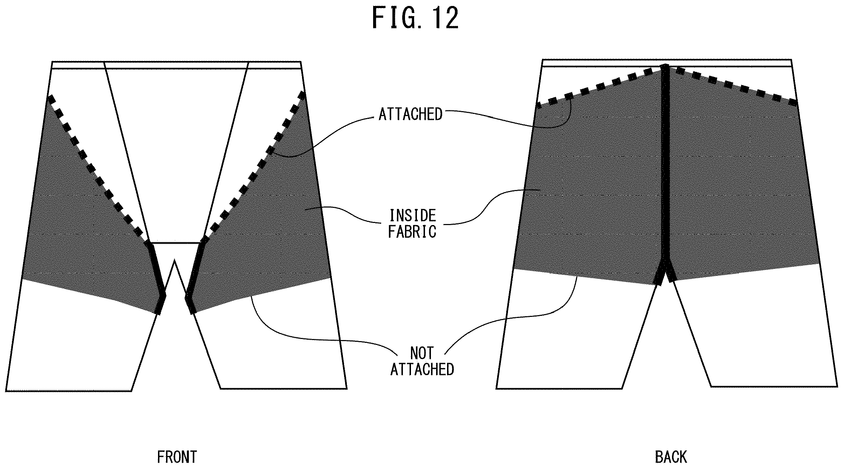

As shown in the pattern of FIG. 12, the inside fabric was arranged in a manner running from the groin part position to the side surfaces and covering the buttock part. In the same way as Example 1, a women's M size girdle was fabricated. This was evaluated in the same way as Example 1. The results of evaluation are shown in the following Table 1 together with the properties of the fabric and garment.

EP 3 729 985 A1

[Example 15]

Except for using as the body fabric a fabric of 6 course satin knit by running Nylon 44 dtex/34f at the front reed and 310 dtex polyurethane fiber at the back reed by full sets and using as the inside fabric a fabric knit obtained by using a 28 gauge single tricot machine and knit by running 33 dtex/18f polyester filament at the front reed and 33 dtex polyurethane fiber at the back reed by full sets and making the front structure 2-3/1-0 and the back structure 1-0/1-2, the same procedure as in Example 8 was followed to fabricate a women's M size girdle by the pattern of FIG. 6. This was evaluated in the same way as Example 1. The results of evaluation are shown in the following Table 1 together with the properties of the fabric and garment.

[Example 16]

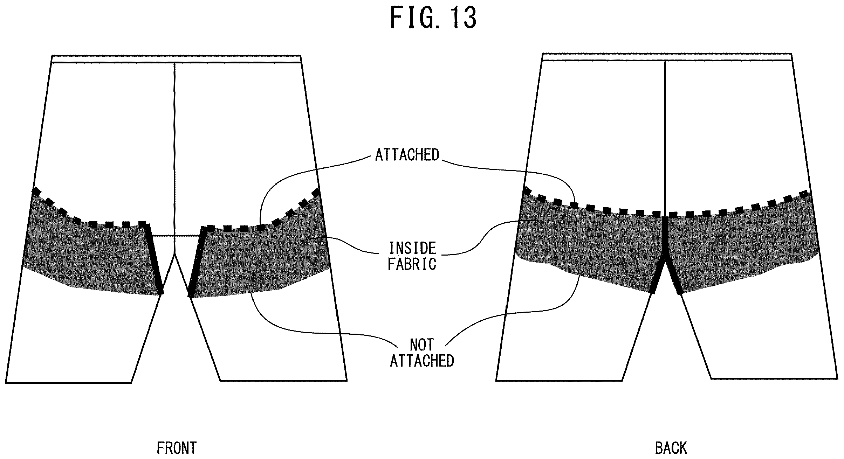

Except for, as shown in the pattern of FIG. 13, making the bottom garment one with no panel for restraining the belly at the front part, running the inside fabric from the groin position to the side surfaces and superposing and bonding it over the gluteal fold, the same procedure as in Example 1 was followed to prepare a women's M size girdle. This was evaluated in the same way as Example 1. Further, the inside fabric was only attached at the top end of the inside fabric. The results of evaluation are shown in the following Table 1 together with the properties of the fabric and garment.

[Comparative Example 1]

Except for not having an inside fabric, the same procedure as in Example 1 was followed to fabricate a women's M size girdle. This was evaluated in the same way as Example 1. The results of evaluation are shown in the following Table 1 together with the properties of the fabric and garment.

[Comparative Example 2]

Except for using as an inside fabric a fabric obtained by running 56 dtex/24f Nylon filaments through the front reed and 310 dtex polyurethane fibers through the back reed in respectively full sets and finishing 6 course satin fabric by ordinary finishing, the same procedure as in Example 1 was followed to fabricate a women's M size girdle. This was evaluated in the same way as Example 1. The results of evaluation are shown in the following Table 1 together with the properties of the fabric and garment.

[Comparative Example 3]

Except for attaching the entire inside fabric to the body fabric, the same procedure as in Example 1 was used to fabricate a women's M size girdle. This was evaluated in the same way as Example 1. The results of evaluation are shown in the following Table 1 together with the properties of the fabric and garment.

[Table 1-1]

| | | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|---|
| Pattern | | | FIG. 1 | FIG. 2 | FIG. 3 | FIG. 1 | FIG. 4 | FIG. 5 | FIG. 1 | FIG. 6 | FIG. 7 | FIG. 8 |
| Body fabric | Basis weight | [g/m$^2$] | 172 | 172 | 135 | 220 | 172 | 172 | 192 | 172 | 172 | 172 |
| | Thickness | [mm] | 0.45 | 0.45 | 0.41 | 0.55 | 0.45 | 0.45 | 0.52 | 0.45 | 0.45 | 0.45 |
| | Stress at time of horizontal 50% stretching | [N] | 1.5 | 1.5 | 0.56 | 6 | 1.5 | 1.5 | 4 | 1.5 | 1.5 | 1.5 |
| | Stretch recovery rate | [%] | 96 | 96 | 92 | 95 | 96 | 96 | 92 | 96 | 96 | 96 |
| Inside fabric | Basis weight | [g/m$^2$] | 135 | 135 | 135 | 147 | 135 | 135 | 155 | 135 | 135 | 135 |
| | Thickness | [mm] | 0.41 | 0.41 | 0.41 | 0.48 | 0.41 | 0.41 | 0.5 | 0.41 | 0.41 | 0.41 |
| | Stress at time of horizontal 50% stretching | [N] | 0.56 | 0.56 | 0.56 | 3.1 | 0.56 | 0.56 | 1.68 | 0.56 | 0.56 | 0.56 |
| | Stretch recovery rate | [%] | 92 | 92 | 92 | 90 | 92 | 92 | 89 | 92 | 92 | 92 |
| | Vertical direction maximum width | [cm] | 13.7 | 27 | 13.7 | 13.7 | 13.7 | 13.7 | 13.7 | 13.7 | 13.7 | 15.7 |
| | Vertical direction minimum width | [cm] | 13.5 | 17.2 | 13.5 | 13.5 | 13.5 | 13.5 | 13.5 | 13.5 | 8.5 | 10.2 |
| Inside fabric horizontal stress/body fabric horizontal stress ratio | | [-] | 0.37 | 0.37 | 1 | 0.52 | 0.37 | 0.37 | 0.42 | 0.37 | 0.37 | 0.37 |
| Area of inside fabric not attached to body fabric | | [%] | 97 | 98 | 92 | 97 | 47 | 92 | 97 | 97 | 95 | 96 |
| Ratio of lower end part not attached to body fabric | | [%] | 85 | 80 | 85 | 86 | 0 | 85 | 85 | 86 | 83 | 84 |
| Area of buttock part covered by inside fabric | | [%] | 48 | 98 | 48 | 48 | 48 | 23 | 48 | 48 | 35 | 27 |
| Position of 70% or more of attached part of flank end with respect to horizontal line passing through a point 5 cm above fork part | | | Above | Above | Above | Above | Above | Above | Above | Above | Below | Below |
| Compression | Hip tops | [hPa] | 14 | 14 | 12 | 23 | 17 | 11 | 18 | 14 | 12 | 13 |
| | Belly | [hPa] | 10 | 10 | 8 | 14 | 11 | 8 | 13 | 13 | 9 | 10 |
| Sway dampening effect | | [%] | 65 | 62 | 60 | 76 | 40 | 32 | 72 | 66 | 63 | 35 |
| Stride difference | | [cm] | 1.9 | 1.1 | 1.7 | 1.9 | 1 | 0.8 | 2.1 | 1.8 | 2.1 | 1.7 |

14

(continued)

| | | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|---|
| Walking time difference | | [sec] | 33 | 22 | 28 | 34 | 20 | 20 | 35 | 32 | 36 | 29 |
| Knee angle $\Theta$ | | [deg.] | -5.1 | -0.8 | -3.4 | -4.8 | -0.5 | -0.7 | -5.8 | -4.9 | 4.8 | 3.2 |
| Feeling when worn | Swaying feeling | [-] | 4.8 | 4.6 | 4.4 | 4.8 | 3.4 | 3 | 4.8 | 4.8 | 3.8 | 3.4 |
| | Tight feeling | [-] | 4.6 | 4 | 4.4 | 3.2 | 4 | 4 | 3.8 | 4.4 | 4.4 | 4.6 |
| | Ease of motion | [-] | 4.8 | 3.8 | 4.8 | 3.6 | 3.6 | 3.6 | 4 | 4.6 | 4.6 | 4.8 |
| | Tired feeling | [-] | 4.6 | 4 | 4.4 | 3.8 | 3.8 | 3.6 | 4.2 | 4.6 | 4.6 | 4.6 |

[Table 1-2]

| | | | Ex. 11 | Ex. 12 | Ex. 13 | Ex. 14 | Ex. 15 | Ex. 16 | Comp. Ex. 1 | Comp. Ex. 2 | Comp. Ex. 3 |
|---|---|---|---|---|---|---|---|---|---|---|---|
| Pattern | | | FIG. 9 | FIG. 10 | FIG. 11 | FIG. 12 | FIG. 6 | FIG. 13 | - | FIG. 1 | FIG. 1 |
| Body fabric | Basis weight | [g/m²] | 172 | 172 | 172 | 172 | 192 | 172 | 172 | 172 | 172 |
| | Thickness | [mm] | 0.45 | 0.45 | 0.45 | 0.45 | 0.52 | 0.45 | 0.45 | 0.45 | 0.45 |
| | Stress at time of horizontal 50% stretching | [N] | 1.5 | 1.5 | 1.5 | 1.5 | 4 | 1.5 | 1.5 | 1.5 | 1.5 |
| | Stretch recovery rate | [%] | 96 | 96 | 96 | 96 | 92 | 96 | 96 | 96 | 96 |
| Inside fabric | Basis weight | [g/m²] | 135 | 135 | 135 | 135 | 155 | 135 | - | 240 | 172 |
| | Thickness | [mm] | 0.41 | 0.41 | 0.41 | 0.41 | 0.5 | 0.41 | - | 0.57 | 0.45 |
| | Stress at time of horizontal 50% stretching | [N] | 0.56 | 0.56 | 0.56 | 0.56 | 1.68 | 0.56 | - | 3.5 | 1.5 |
| | Stretch recovery rate | [%] | 92 | 92 | 92 | 92 | 89 | 92 | - | 95 | 96 |
| | Vertical direction maximum width | [cm] | 5.7 | 10.2 | 6.3 | 27 | 13.7 | 13.7 | - | 13.7 | 13.7 |
| | Vertical direction minimum width | [cm] | 4 | 4.1 | 4.6 | 10.2 | 8.5 | 8.5 | - | 13.5 | 13.5 |
| Inside fabric horizontal stress/body fabric horizontal stress ratio | | [-] | 0.37 | 0.37 | 0.37 | 0.37 | 0.37 | 0.37 | - | 2.3 | 1 |
| Area of inside fabric not attached to body fabric | | [%] | 91 | 90 | 90 | 98 | 95 | 95 | - | 97 | 0 |
| Ratio of lower end part not attached to body fabric | | [%] | 83 | 81 | 82 | 82 | 83 | 84 | - | 85 | 0 |
| Area of buttock part covered by inside fabric | | [%] | 18 | 0 | 16 | 90 | 35 | 35 | | 48 | 48 |
| Position of 70% or more of attached part of flank end with respect to horizontal line passing through a point 5 cm above fork part | | | Below | Below | Below | Below | Below | Below | - | Above | Above |
| Compression | Hip tops | [hPa] | 13 | 13 | 12 | 15 | 17 | 12 | 12 | 28 | 22 |
| | Belly | [hPa] | 9 | 8 | 8 | 11 | 11 | 10 | 8 | 18 | 12 |
| Sway dampening effect | | [%] | 52 | 32 | 54 | 64 | 68 | 63 | 25 | 34 | 30 |
| Stride difference | | [cm] | 2 | 1.9 | 1.7 | 1 | 2 | 2 | 0.5 | 0.8 | 0.6 |

(continued)

| | | | Ex. 11 | Ex. 12 | Ex. 13 | Ex. 14 | Ex. 15 | Ex. 16 | Comp. Ex. 1 | Comp. Ex. 2 | Comp. Ex. 3 |
|---|---|---|---|---|---|---|---|---|---|---|---|
| Walking time difference | | [sec] | 34 | 32 | 28 | 19 | 33 | 35 | 15 | 18 | 16 |
| Knee angle $\Theta$ | | [deg.] | 4.5 | 4.6 | 4.2 | 1 | 5.2 | 4.7 | 0.1 | -4.2 | 0.1 |
| Feeling when worn | Swaying feeling | [-] | 3.6 | 3 | 4 | 4.6 | 4.8 | 4 | 2.4 | 3 | 2.8 |
| | Tight feeling | [-] | 4.4 | 4.4 | 4.4 | 4 | 4.2 | 4.4 | 4.4 | 2 | 3 |
| | Ease of motion | [-] | 4.4 | 4.6 | 4.2 | 3.8 | 4.6 | 4.6 | 4.6 | 2.4 | 3.8 |
| | Tired feeling | [-] | 4.4 | 4.4 | 4.6 | 4.2 | 4 | 4.4 | 3 | 2.8 | 3 |

INDUSTRIAL APPLICABILITY

The bottom garment of the present invention is structured with an inside fabric superposed on the buttock bottom part at the inside of the body fabric and with at least part of the same not attached to the body fabric. Due to this, an external rotation force or internal rotation force is generated with respect to the thighs as well. As a result, the legs become easier to extend when walking or otherwise upright, a beautiful form can be obtained when walking or running, the stride becomes broader, the speed of walking or running is increased, and walking or running becomes more fun, so the amount of walking etc. is increased and the effect in preventing sagging of the buttocks is excellent. Therefore, the bottom garment of the present invention can be utilized for not only girdles, but also sports-use half pants, pants for the middle aged and elderly, etc.

**Claims**

1. A bottom garment comprised of a body fabric containing elastic yarn, in which bottom garment, there is a two-layer structure present in which an inside fabric is superposed at an inside of said body fabric and at least part of said inside fabric is not attached to said body fabric and in which a stress at the time of 50% stretching of the inside fabric in the horizontal direction is 0.3 time to 1.6 times the stress at the time of 50% stretching of said body fabric in the horizontal direction.

2. The bottom garment according to claim 1, wherein the stress at the time of 50% stretching of said body fabric in the horizontal direction is 0.3N to 5N.

3. The bottom garment according to claim 2, wherein the stress at the time of 50% stretching of said body fabric in the horizontal direction is 0.3N to 3N.

4. The bottom garment according to any one of claim 1 to claim 3, wherein the compression of the buttock part is 5 hPa to 20 hPa.

5. The bottom garment according to any one of claim 1 to claim 4, wherein an area ratio of the part of said inside fabric not attached to the body fabric is 70% or more of a total area of said inside fabric.

6. The bottom garment according to any one of claim 1 to claim 5, wherein a ratio of a bottom end part of said inside fabric not attached to the body fabric is 20% to 100% of the total length of the bottom end part of said inside fabric.

7. The bottom garment according to any one of claim 1 to claim 6, wherein said inside fabric has a size covering 10% or more and 60% or less of the area of the buttock part of the region of the body from left and right flank lines and a ridge plane to a gluteal fold.

8. The bottom garment according to any one of claim 1 to claim 7, wherein a width of said inside fabric in a vertical direction is 5 cm to 20 cm.

9. The bottom garment according to any one of claim 1 to claim 8, wherein said inside fabric covers at least part of a buttock bottom part.

10. The bottom garment according to any one of claim 1 to claim 9, wherein at the front surface of the bottom garment, 70% or more of an attached part of a flank end part of said inside fabric is positioned above a horizontal line running through a point 5 cm above a fork part.

11. The bottom garment according to any one of claim 1 to claim 9, wherein at the front surface of the bottom garment, 70% or more of an attached part of a flank end part of said inside fabric is positioned below a horizontal line running through a point 5 cm above a fork part.

# FIG. 1

BELLY RESTRAINER

ATTACHED

INSIDE
FABRIC

NOT
ATTACHED

FLANK END PART
(SEWN)

FORK PART

CROTCH PART

FRONT

FLANK END PART
(SEWN)

BACK

EP 3 729 985 A1

FIG. 2

## FIG. 3

FRONT                              BACK

ATTACHED

INSIDE FABRIC

SLITS

NOT ATTACHED

EP 3 729 985 A1

FIG. 4

INSIDE
FABRIC

ATTACHED

FRONT

BACK

EP 3 729 985 A1

# FIG. 5

ATTACHED

INSIDE
FABRIC

NOT
ATTACHED

FRONT

BACK

EP 3 729 985 A1

# FIG. 6

ATTACHED

INSIDE FABRIC

NOT ATTACHED

FLANK END PART (SEWN)

FORK PART

CROTCH PART

FRONT

FLANK END PART (SEWN)

BACK

EP 3 729 985 A1

FIG. 7

ATTACHED

INSIDE
FABRIC

NOT
ATTACHED

BACK

FRONT

FIG. 8

ATTACHED

INSIDE FABRIC

NOT ATTACHED

BACK

FRONT

FIG. 9

ATTACHED

INSIDE FABRIC

NOT ATTACHED

BACK

FRONT

# FIG. 10

ATTACHED

INSIDE FABRIC

NOT ATTACHED

FRONT

BACK

FIG. 11

ATTACHED

INSIDE FABRIC

NOT ATTACHED

BACK

FRONT

# FIG. 12

ATTACHED

INSIDE FABRIC

NOT ATTACHED

FRONT

BACK

EP 3 729 985 A1

# FIG. 13

ATTACHED

INSIDE
FABRIC

NOT
ATTACHED

FRONT

BACK

EP 3 729 985 A1

# FIG. 14

ILIAC POINT

PATELLA CENTER

KNEE ANGLE

LATERAL
MALLEOLUS
POINT

## INTERNATIONAL SEARCH REPORT

| International application No. |
|---|
| PCT/JP2018/047113 |

**A. CLASSIFICATION OF SUBJECT MATTER**
Int.Cl. A41C1/00(2006.01)i, A41B9/04(2006.01)i

According to International Patent Classification (IPC) or to both national classification and IPC

**B. FIELDS SEARCHED**

Minimum documentation searched (classification system followed by classification symbols)
Int.Cl. A41C1/00-5/00, A41B9/00-9/16, A41D1/06-1/14, 13/00-13/12

Documentation searched other than minimum documentation to the extent that such documents are included in the fields searched
| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2017-179665 A (WACOAL CORP.) 05 October 2017, paragraphs [0015]-[0036], fig. 1-6 & CN 207492089 U | 1-5, 7-10<br>6, 11 |
| X<br>A | Microfilm of the specification and drawings annexed to the request of Japanese Utility Model Application No. 44974/1988 (Laid-open No. 29407/1990) (NUTRIMETICS INTERNATIONAL (JAPAN) CO., LTD.) 26 February 1990, specification, page 4, lines 11-19, page 6, line 5 to page 7, line 5, page 7, lines 18-20, fig. 1-5 (Family: none) | 1-5, 7-11<br>6 |

☒ Further documents are listed in the continuation of Box C.     ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 13 March 2019 (13.03.2019) | 26 March 2019 (26.03.2019) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**

| International application No. |
| --- |
| PCT/JP2018/047113 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | JP 2012-188762 A (GUNZE LIMITED) 04 October 2012, | 1-5, 7-10 |
| Y | paragraphs [0012]-[0016], [0023], fig. 1-4 | 6-0 |
| A | (Family: none) | 11 |
| Y | JP 9-241902 A (WACOAL CORP.) 16 September 1997, paragraph [0040], fig. 5 & US 5762535 A, column 11, line 31 to column 12, line 2, fig. 5 & FR 2745473 A1 & CN 1174685 A | 6-10 |

Form PCT/ISA/210 (continuation of second sheet) (January 2015)

**EP 3 729 985 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001303305 A
- JP 2004300619 A
- JP 2012102419 A